**Europäisches Patentamt**

**European Patent Office**

**Office européen des brevets**

(11) Veröffentlichungsnummer : **0 189 518**
**B1**

(12) **EUROPÄISCHE PATENTSCHRIFT**

(45) Veröffentlichungstag der Patentschrift :
09.11.88

(51) Int. Cl.⁴ : **F 16 H   1/20**

(21) Anmeldenummer : 85111168.2

(22) Anmeldetag : 04.09.85

(54) Zahnradgetriebe.

(30) Priorität : 19.12.84 DE 3446211

(43) Veröffentlichungstag der Anmeldung :
06.08.86 Patentblatt 86/32

(45) Bekanntmachung des Hinweises auf die Patenterteilung : 09.11.88 Patentblatt 88/45

(84) Benannte Vertragsstaaten :
CH DE FR GB IT LI NL SE

(56) Entgegenhaltungen :
CH-A-   236 082
CH-A-   587 423
DD-A-   223 203
DE-A- 2 825 877
DE-B- 2 338 307
DE-B- 2 420 825
ETZ-A, Band 95, 1984, H. 10, Berlin, Seiten 520-523

(73) Patentinhaber : MAN GUTEHOFFNUNGSHÜTTE
GMBH
Bahnhofstrasse, 66 Postfach 11 02 40
D-4200 Oberhausen 11 (DE)

(72) Erfinder : Kotzur, Joachim, Dr.-Ing.
Holtkampstrasse 18
D-4200 Oberhausen 11 (DE)

## Beschreibung

Die Erfindung betrifft ein Zahnradgetriebe mit einem Zentralrad, an dessen Umfang eine oder mehrere Ritzel angeordnet sind, die im Getriebegehäuse gelagert sind und die das Zentralrad antreiben bzw. von diesem angetrieben werden, wobei die Lage der Ritzelverzahnung zu der Zentralradverzahnung über äußere Verstellkräfte beeinflußt wird, wie es aus der US-A-2 337 501 bekannt ist.

Solche Zahnradgetriebe werden z. B. für Mehrwellenkompressoren verwendet, bei denen auf den Ritzelwellen Radialkompressorstufen fliegend angeordnet sind, die zur Einhaltung einer optimalen Volumenstromzahl mit unterschiedlichen Drehzahlen laufen. Das Zentralrad des Getriebes hat hierbei die Aufgabe, in Kombination mit den Ritzelwellen die richtige Drehzahlübersetzung vom Antrieb und gleichzeitig einen genügend großen radialen Abstand zwischen den Laufrädern mit den diese umgebenden Spiralgehäusen herzustellen. Das Zentralrad wird dabei im allgemeinen durch einen langsamlaufenden Elektromotor angetrieben.

Mit zunehmendem Durchmesser der Laufräder und der Spiralgehäuse sind auch größere Durchmesser des Zentralrades und bei gleichbleibender Drehzahl des Antriebes auch hohe Umfangsgeschwindigkeiten des Zentralrades erforderlich, welche erhöhte mechanische Reibungsverluste in den entsprechend vergrößerten Gleitlagern des Zentralrades und Ventilationsverluste an den Stirnflächen der Zahnräder im Getriebegehäuse bewirken.

Dieser Effekt wird mit zunehmender Drehzahl des Antriebes verstärkt, wie z. B. bei Dampfturbinenantrieb. Es ist deshalb bereits vorgeschlagen worden, die Antriebsleistung der Turbine über ein am Umfang des Zentralrades angeordnetes Ritzel an das Zentralrad zu übertragen (FR-PS 1 318 232).

In der US-PS 23 37 501 ist eine hydraulisch wirkende Anpassung der Ritzelwellenlage bei einem Stirnradgetriebe beschrieben.

In der US-PS 31 60 025 wird mit Permanentmagneten ein zusätzliches Drehmoment zwischen den Zähnen von im Eingriff miteinander stehenden Zahnrädern erzeugt.

In der DE-OS 33 26 619 wird für ein Stirnradgetriebe mit großer Zahnbreite eine gleichmäßige Lastverteilung über die Zahnbreite durch über Signale von Meßwertgebern gesteuerte Stellantriebe bewirkt.

Aus der DE-OS 32 20 851 ist ein Magnetlager mit Permanent-Magneten bei verstellbarer Stützlage bekannt.

In der DE-AS 12 02 392 wird eine selbsttätige elektromagnetische Zentrierung zweier koaxial hintereinander angeordneter Rotoren beschrieben, wobei sich die Achslage jedoch nicht beeinflussen läßt, wie dies bei den bekannten aktivmagnetischen Lagern der Fall ist.

Ausgehend von diesem Stand der Technik besteht die Aufgabe der Erfindung darin, ein Zahnradgetriebe zu schaffen, welches zuverlässig den für optimale Laufbedingungen erforderlichen Abstand der Verzahnungen von Zentralrad und Ritzelwellen bei den wärme- und fliehkraftbedingten Dehnungen, insbesondere des Zentralrades, auch bei schnellen Laständerungen einhält und gleichzeitig nur minimale mechanische Reibungs- und Ventilationsverluste hat.

Die Lösung besteht nach den Patentansprüchen darin, daß die Ritzelwellen in aktiven Magnetlagern gelagert werden, deren Magnetkräfte über am Umfang des Zentralrades angebrachte Sensoren so gesteuert werden, daß die vorgegebene Achslage der Ritzelwellen so verschoben wird, daß die Zahneingriffsverhältnisse erhalten bleiben und das Zentralrad über die Verzahnung optimal zentriert wird.

Dabei kann das Zentralrad mit niedrigerer Drehzahl als bei direktem koaxialen Turbinenantrieb laufen.

Die Gleitlager der Welle des Zentralrades können entfallen, wenn das Zentralrad durch in seinen Zahnkranz eingeleitete radiale Zentrierkräfte gehalten und der Abstand der Verzahnung von Zentralrad und Ritzeln zuverlässig eingehalten wird.

In Fällen, in denen die Zentrierkräfte der Ritzelverzahnung für die genaue Einhaltung der Lage des Zentralrades nicht ausreicht, können die auf das Zentralrad ausgeübten radialen Zentrierungskräfte durch zusätzliche am Umfang des Zentralrades angeordnete Magnete ergänzt werden, die ebenfalls über die am Umfang des Zentralrades angeordnete Sensoren gesteuert werden.

Schließlich besteht die Möglichkeit, über am Umfang des Zentralrades wirkende Magnetkräfte auch ein Drehmoment auf das Zentralrad auszuüben und es auf diese Weise anzutreiben. Hierfür können im Umfangsbereich radial oder stirnseitig angeordnete Motoren nach dem Prinzip elektrischer Linearmotoren verwendet werden, die der geringen Krümmung des Umfanges des Zentralrades angepaßt werden und etwa nach dem umgekehrten Prinzip einer Magnetschwebebahn arbeiten. Hierbei bildet das Zentralrad den Ständer (entsprechend der Schiene), der Polschuh mit dem Magneten und den Wicklungen (sonst Bestandteil des Zuges) bleibt ortsfest. Die so an das Zentralrad übertragene elektrische Leistung kann z. B. als Ergänzung der von einer Prozeßgasturbine über eine Ritzelwelle an das Zentralrad abgegebenen Antriebsleistung dienen, sofern kein Elektromotor hoher Drehzahl vorhanden ist, bzw. es kann gegebenenfalls bei Antriebsenergieüberschuß dieser Linearmotor als Generator arbeiten.

Die Axialkräfte des Zentralrades können über Druckkämme der Ritzel von aktiven Axial-Magnetlagern der Ritzelwellen aufgenommen werden, oder umgekehrt, die Axialkräfte der Ritzelwellen über ihre Druckkämme und das Zentralrad bzw. den Zahnkranz von an dessen Stirnflächen angeordneten axialen Magnetlagerelementen.

Die geringsten mechanischen Verluste entstehen, wenn sowohl die Axialkräfte der Ritzelwellen als auch die des Zentralrades von axialen Magnetlagern aufgenommen werden.

Die Erfindung wird nachstehend anhand von Schnittzeichnungen einiger Ausführungsbeispiele beschrieben.

Es zeigen :

Fig. 1 ein Zahnradgetriebe mit sensorgesteuerten magnetischen Ritzelwellen und Zusatzmagneten am Zahnkranz und

Fig. 2 ein Zahnradgetriebe mit Antrieb des Zentralrades durch einen Linearmotor,

Fig. 3 ein Zahnradgetriebe mit als Zahnkranz mit Innenverkleidung ausgebildetem Zentralrad.

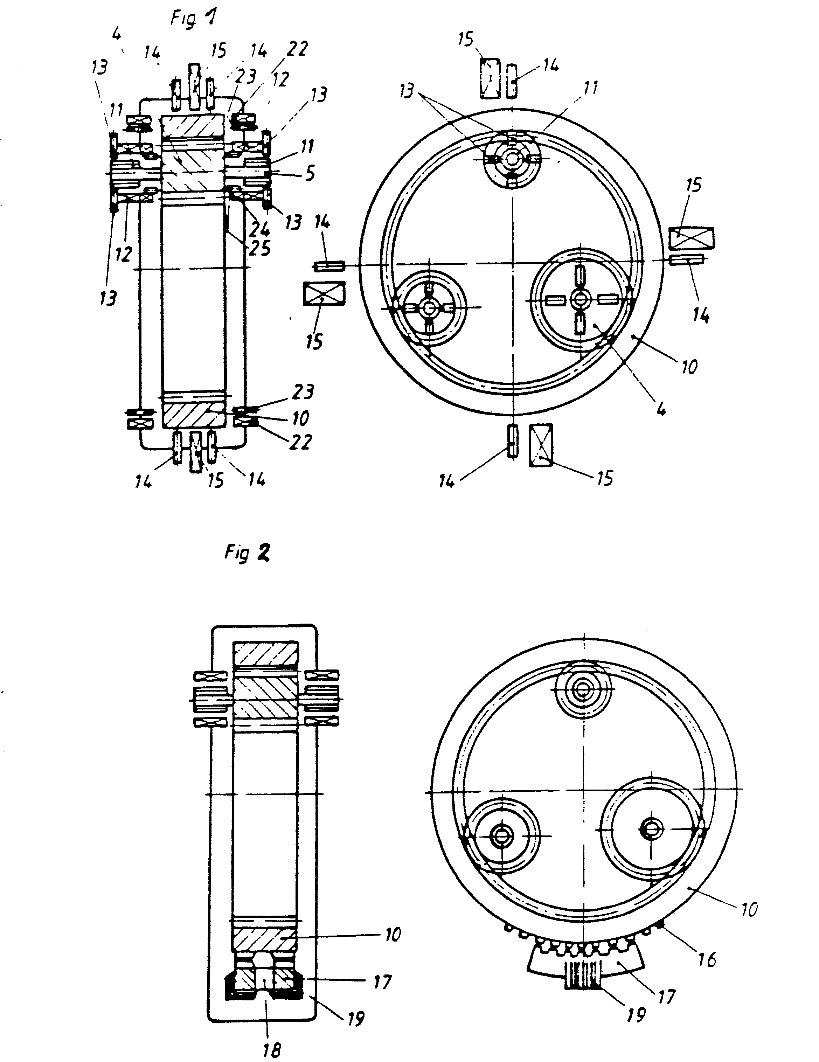

In Fig. 1 steht das Zentralrad 10 über seine Verzahnung 2 mit der Verzahnung 3 der Ritzel 4 im Eingriff, deren Wellen 5 in Magnetlagern 12 des Getriebegehäuses 7 gelagert sind. Das Zentralrad 10 hat keine mit Lagerstellen versehenen Wellenenden. Die Ritzelwellen können hierbei z. B. fliegend auf ihnen angeordnete Radialkompressorstufen oder Kompressoren mit eigener Lagerung sowie elektrische Generatoren antreiben und z. B. von Dampf- oder Prozeßgasturbinen oder schnellaufenden Elektromotoren angetrieben werden.

Die Ritzelwellen 5 sind zur Vermeidung von Wirbelstromverlusten mit Blechpaketen 11 versehen. Die Magnetlager 12 werden über am Lagerumfang verteilte Sensoren 13 gesteuert, die die Ritzelwellen 5 in ihrer vorgegebenen Achslage halten, welche wiederum über die Impulse der Sensoren 14 am Unfang des Zentralrades so beeinflußt werden kann, daß der radiale Abstand der Zähne 3 der Ritzel 4 von den Zähnen 2 des Zahnkranzes 10 erhalten bleibt. Zusätzliche radial angeordnete Magnete 15, die ebenfalls über die Sensoren 14 gesteuert werden, tragen zur Korrektur der Achslage des Zahnkranzes 10 bei. Axial angeordnete, über Sensoren 23 gesteuerte Magnete 22 nehmen den Axialschub des Zahnkranzes 10 auf. Der Axialschub der Ritzel 4 wird von axialen Magnetlagern 24 aufgenommen, die über axial an den Ritzelwellen angeordnete Sensoren 25 gesteuert werden.

In Fig. 2 wird durch Magnetkräfte nach dem Prinzip des Linearmotors am Umfang des Zahnkranzes 10 ein Drehmoment erzeugt (umgekehrtes Prinzip der Magnetschwebebahn). Der Zahnkranz 10 als Zentralrad ist hierbei am Umfang als Ständer 16 ausgebildet, der in Kombination mit dem Polschuh 17, Magnet 18 und Wicklung 19 die elektrische Antriebsleistung an das Zentralrad 10 überträgt.

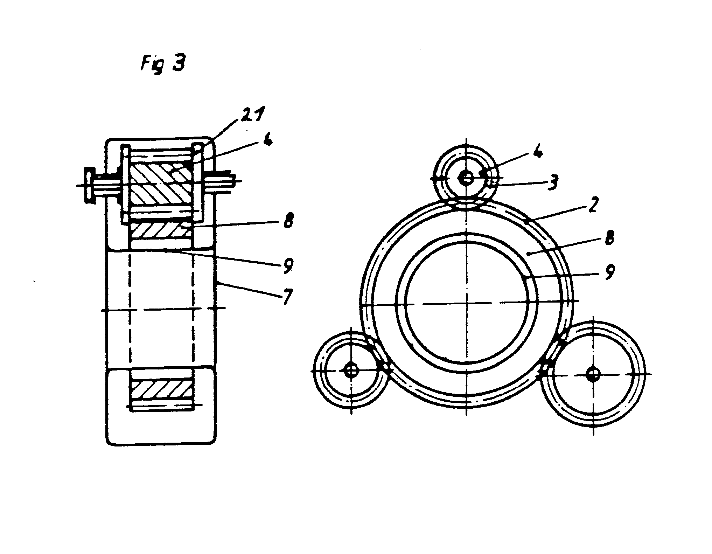

In Fig. 3 ist das Zentralrad als Zahnkranz 8 mit Außenverzahnung 2 ausgebildet, der innen mit einer im Getriebegehäuse 7 befestigten Verkleidung 9 zur Verringerung der Ventilationsverluste abgedeckt ist. Die Magnetlager sind hier vereinfacht dargestellt. Der Schub des Zentralrades 8 wird in diesem Beispiel über die Druckkämme 21 der Ritzel 4 auf die AxialMagnetlager der Ritzelwellen übertragen.

Verzeichnis der Bezugsziffern :

Fig. 1 :

2 Verzahnung des Zentralrades bzw. Zahnkranzes

3 Verzahnung des Ritzels 4

4 Ritzel

5 Ritzelwelle

7 Getriebegehäuse

10 Zahnkranz mit Innenverzahnung als Zentralrad

11 Blechpaket

12 Aktives Magnetlager, radial

13 Sensor an der Ritzelwelle, radial

14 Sensor am Zentralrad, radial

15 Magnetlagerelement, radial

22 Magnetlagerelement, axial

23 Sensor am Zentralrad, axial

24 Aktives Magnetlager, radial

25 Sensor an Ritzelwelle, axial

Fig. 2 :

16 Ständer des Linearmotors

17 Polschuh des Linearmotors

18 Magnet des Linearmotors

19 Wicklung des Linearmotors

Fig. 3 :

8 Zahnkranz mit Außenverzahnung als Zentralrad

9 Innenverkleidung

21 Druckkamm der Ritzel

**Patentansprüche**

1. Zahnradgetriebe mit einem Zentralrad (8, 10), an dessen Umfang eine oder mehrere im Getriebegehäuse (7) gelagerte Ritzelwellen (5) angeordnet sind, die das Zentralrad über die Ritzel (4) antreiben bzw. vom Zentralrad über die Ritzel angetrieben werden, wobei die Lage der Ritzelverzahnung (3) zu der Zentralradverzahnung (2) über äußere Verstellkräfte beeinflußt wird, dadurch gekennzeichnet, daß die Ritzelwellen (5) in aktiven Magnetlagern (12) gelagert sind, deren Magnetkräfte über am Umfang des massiven Zentralrades bzw. der Zahnkränze (8, 10) angeordnete Sensoren (14) so gesteuert werden, daß die vorgegebene Achslage der Ritzelwellen (5) so verschoben wird, daß der Abstand der Verzahnung (3) der Ritzelwellen von der Verzahnung (2) des Zentralrades bzw. der Zahnkränze (8, 10) auch bei dessen Fliehkraft- und Wärmedehnung erhalten bleibt, ebenso wie die vorgegebene Achslage des Zentralrades bzw. der Zahnkränze.

2. Zahnradgetriebe nach Anspruch 1, dadurch gekennzeichnet, daß über die am Umfang des massiven Zentralrades bzw. der Zahnkränze (8, 10) angeordneten Sensoren (14) am Umfang des Zentralrades bzw. der Zahnkränze angeordnete Magnete (15) radiale Zentrierkräfte auf das Zentralrad bzw. die Zahnkränze ausüben.

3. Zahnradgetriebe nach Anspruch 1 bis 2, dadurch gekennzeichnet, daß das massive Zentralrad bzw. die Zahnkränze (8, 10) in ihrem Umfangsbereichen über einen oder mehrere nach dem Prinzip der Linearmotoren arbeitende Elektromotoren angetrieben werden, die der Krümmung des Umfanges des Zentralrades angepaßt sind, wobei das Zentralrad bzw. die Zahnkränze den mit diesem umlaufenden Ständer (16) enthalten und die Polschuhe (17) mit den Magneten (18) und Wicklungen (19) ortsfest sind, bzw. daß diese Motoren bei Leistungsüberschuß als Generator arbeiten.

4. Zahnradgetriebe nach Anspruch 1 bis 3, dadurch gekennzeichnet, daß die Axialkräfte der Ritzelwellen von aktiven Magnetlagern (24) aufgenommen werden, die über am Lagerumfang verteilte Sensoren (25) gesteuert werden.

5. Zahnradgetriebe nach Anspruch 1 bis 4, dadurch gekennzeichnet, daß die Axialkräfte des Zentralrades von aktiven Magnetlagerelementen (22) aufgenommen werden, die über am Umfang des Zentralrades verteilte Sensoren (23) gesteuert werden.

6. Zahnradgetriebe nach Anspruch 1 bis 5, dadurch gekennzeichnet, daß der Zahnkranz (8, 10) seitlich und/oder radial in geringem Abstand mit einer im Getriebegehäuse (7) befestigten Verkleidung (9) versehen ist.

**Claims**

1. Gearbox with a central wheel (8, 10), on the periphery of which one or more pinion shafts (5) mounted in the gearbox housing (7) are arranged which drive the central wheel via the pinions (4) or are driven by the central wheel via the pinions, whereby the position of the pinion toothing (3) with respect to the toothing (2) of the central wheel is influenced by external adjustment forces, characterised in that, the pinion shafts (5) are mounted in active magnetic bearings (12) whose magnetic forces are so controlled by means of sensors (14) arranged on the periphery of the massive central wheel or the toothed wheels (8, 10) that the predetermined axial position of the pinion shafts (5) is so displaced that the spacing of the toothing (3) of the pinion shafts from the toothing (2) of the central wheel or the toothed wheels (8, 10) remains constant even under centrifugal and thermal expansion thereof, as does the predetermined axial position of the central wheel or the toothed wheels.

2. Gearbox as claimed in claim 1, characterised in that, magnets (15) arranged on the periphery of the central wheel or the toothed wheels exert radial centering forces on the central wheel or the toothed wheels via the sensors arranged on the periphery of the massive central wheel or the toothed wheels (8, 10).

3. Gearbox as claimed in claims 1 to 2, characterised in that, the massive central wheel or the toothed wheels (8, 10) are driven at their peripheral regions by one or more electric motors operating on the principle of linear motors, which are matched to the curvature of the periphery of the central wheel, whereby the central wheel or the toothed wheels include the stand (16) rotating with it and the pole shoes (17) are fixed with respect to magnets (18) and the winding (19) or that these motors operate as generators if there is an excess of power.

4. Gearbox as claimed in claims 1 to 3, characterised in that, the axial forces of the pinion shafts are accommodated by active magnetic bearings (24) which are controlled by sensors (25) distributed over the bearing periphery.

5. Gearbox as claimed in claims 1 to 4, characterised in that, the axial forces of the central wheel are accommodated by active magnetic bearing elements (22) which are controlled by sensors (23) distributed over the periphery of the central wheel.

6. Gearbox as claimed in claims 1 to 5, characterised in that, the toothed wheel (8, 10) is provided laterally and/or radially at a small distance with a lining (9) secured in the gearbox housing (7).

**Revendications**

1. Transmission par engrenages avec une roue centrale (8, 10) à la périphérie de laquelle sont disposés un ou plusieurs arbres de pignons (5) montés dans le carter (7) de la transmission, et qui entraînent la roue centrale par l'intermédiaire des pignons (4) ou bien sont entraînés par la roue centrale par l'intermédiaire des pignons, la position de la denture (3) des pignons par rapport à la denture (2) de la roue centrale, étant influencée par des efforts de réglage extérieurs, transmission par engrenages caractérisée en ce que les arbres de pignons (5) sont montés dans des paliers magnétiques actifs (12) dont les forces magnétiques sont commandées par l'intermédiaire de détecteurs (14) disposés sur la périphérie de la roue centrale massive ou bien de la couronne dentée (8, 10) de façon que la position prédéfinie des axes des arbres de pignons (5) soit décalée, de sorte que la distance entre la denture (3) des arbres de pignons et la denture (2) de la roue centrale ou bien de la couronne dentée (8, 10) reste maintenue même lors de l'extension de cette roue centrale ou de cette couronne sous l'action de la force centrifuge et de la chaleur, tout comme la position prédéfinie de l'axe de la roue centrale ou bien de la couronne dentée.

2. Transmission par engrenages selon la revendication 1, caractérisée en ce que par l'intermédiaire des détecteurs (14) disposés à la périphérie de la roue centrale massive ou bien de la couronne dentée (8, 10), des aimants (15) disposés à la périphérie de la roue centrale ou bien de la couronne dentée, exercent sur cette roue centrale ou bien sur cette couronne dentée, des efforts radiaux de centrage.

3. Transmission par engrenages selon l'une des revendications 1 et 2, caractérisée en ce que la roue centrale massive ou bien la couronne dentée (8, 10) est entraînée sur sa zone périphérique par l'intermédiaire d'un ou plusieurs moteurs électriques fonctionnant selon le principe des moteurs linéaires, ces moteurs étant adaptés à la courbure de la périphérie de la roue centrale, la roue centrale ou bien la couronne dentée contenant les stators (16) tournant avec elle, tandis que les pièces polaires (17) avec les aimants (18) et les enroulements (19) sont à poste fixe, ces moteurs fonctionnant en générateurs lors d'un excédent de puissance.

4. Transmission par engrenages selon l'une des revendications 1 à 3, caractérisée en ce que les efforts axiaux des arbres de pignons sont absorbés par des paliers magnétiques actifs (24) qui sont commandés par l'intermédiaire de détecteurs (25) répartis à la périphérie des paliers.

5. Transmission par engrenages selon l'une des revendications 1 à 4, caractérisée en ce que les efforts axiaux de la roue centrale sont absorbés par des éléments de paliers magnétiques actifs (22) qui sont commandés par l'intermédiaire de détecteurs répartis à la périphérie de la roue centrale.

6. Transmission par engrenages selon l'une des revendications 1 à 5, caractérisée en ce que la couronne dentée (8, 10) est munie latéralement et/ou radialement à une faible distance d'un revêtement (9) fixé dans le carter (7) de la transmission.

**Fig 1**

**Fig 2**

1

Fig 3